# EUROPÄISCHE PATENTANMELDUNG

(11) **EP 4 046 531 A1**
(43) Veröffentlichungstag der Anmeldung: **24.08.2022**
(21) Anmeldenummer: 22000031.9
(22) Anmeldetag: 14.02.2022
(51) Int. Cl.: A46B 13/00, A46B 13/02, A46B 5/00

(54) **INTERDENTALBÜRSTE FÜR ELEKTRISCHE ZAHNBÜRSTEN MIT VIELSEITIG NUTZBAREN SCHNITTSTELLEN**

(30) Priorität: 23.02.2021 DE 102021001026
(71) Anmelder: Hiss, Ludwig, 79346 Endingen (DE)
(72) Erfinder: Hiss, Ludwig, 79346 Endingen (DE)

(57) **Zusammenfassung**

Die Erfindung Interdentalbürste für elektrische Zahnbürsten ergänzt die bisherige "Topfbürsten - Reinigungsmethode" um einen eigenständigen Prozess mit Walzenbürsten, der durch vielseitig nutzbare Schnittstellen an einem ebenfalls vielseitig nutzbaren Adapter betrieben wird. Die technisch detailliert beschriebene Ausführung zeigt die Interdentalbürste als Einzelteil eines universellen, modularen Zahnreinigungssystems.

## Beschreibung

Die Erfindung Interdentalbürste ergänzt elektrische Zahnbürsten um den Prozess Zwischenzahnreinigung in einem vielseitig nutzbaren Gesamtkonzept. Sie resultiert aus praktischer Erfahrung mit Plaque in den Zahnzwischenbereichen, der bisher nur durch wiederkehrende Zahnreinigungen beim Zahnarzt entfernbar und damit temporär vermeidbar war. Der Test eines Labormusters der Erfindung war in einer einjährigen Benutzungsphase sehr erfolgreich. Plaque trat nicht mehr auf, und negative Auswirkungen zum Beispiel auf das Zahnfleisch zeigten sich nicht.

### Aufgabenstellung

Hilfsmittel zur Zahnzwischenraumreinigung sind bisher von Hand betriebene Interdentalbürsten und Zahnseide, ergänzt um elektrische Systeme mit Ultraschall und hydraulischen Wasserstrahlverfahren. Ihre Existenz und auch die ausdrückliche Empfehlung zur zusätzlichen Anwendung durch Zahnärzte zeigt, dass die alleinige Verwendung einer herkömmlichen elektrischen Zahnbürste, bestehend aus Handhabungsmodul und aufsteckbarem, abgewinkeltem Bürstenkopf mit Topfbürste für eine vollkommene Zahnpflege nicht ausreicht.

Aufgabe der Erfindung war es, die Vorteile aller Zahnreinigungstechniken in einem modularen Gesamtsystem kostengünstig zu vereinen.

### Ziele der Lösungsfindung

Die Lösung folgt der Philosophie der Nachhaltigkeit. Es sollten möglichst viele, am Markt bereits verfügbare Komponenten in einem modularen Reinigungssystem vornehmlich mit dem Ziel zusammengeführt werden, die Nutzungsakzeptanz und Reinigungsqualität wesentlich zu verbessern. Die Lösung darf nicht nur für den vorderen Gebissbereich (Schneide- / Eckzähne und Prämolare) nutzbar sein, sie muss auch im Bereich der Molare optimal wirken. Aus diesem Grund bevorzugt die Erfindung die derzeit übliche Geometrie der elektrischen Zahnbürsten, deren Drehwinkel zwischen Bürstenkopf und Handhabungsmodul annähernd oder gleich 90° ist. Eine nicht abgewinkelt verlaufende Bewegungsachse zwischen dem Handhabungsmodul mit Antrieb für Reinigungswerkzeuge oder winklig integrierte Mikromotoren direkt an der Schnittstelle der Erfindung werden für künftige Entwicklungen jedoch nicht ausgeschlossen. Um in Zahnzwischenräumen eine optimale Reinigungswirkung zu erzielen, wird an Stelle der bisherigen "Topfbürste" (Borsten sind parallel zur Bewegungsachse angeordnet) das Prinzip "Walzenbürste" (Borsten sind senkrecht zur Bewegungsachse angeordnet) verwendet. Das Reinigungsprinzip mit einer motorbewegten "Bürstenwalze" hat auf Grund geometrischer Vorteile zum Beispiel die Möglichkeit, den Zahnzwischenraum (Spalt) in axialer Richtung, sowohl vom Rachenraum, als auch von außen, entsprechend einem Bohrwerkzeug, vollkommen zu durchdringen. Dabei wirken die Einzelborsten durch die motorische Bewegung und der gleichzeitigen axialen Verschiebung vom Benutzer durch den Spalt hindurch optimal reinigend.

Die derzeit am Markt üblichen elektrischen Zahnbürsten nutzen zur Erzielung der gewünschten Reinigungswirkung vornehmlich eine oszillierende Bewegung der Bürstenachse um circa ± 30°. Der Konstrukteur dieses Prinzips ist wahrscheinlich davon ausgegangen, dass die kreisflächige Anordnung der Borstenenden der "Topfbürste" auf den Zahnoberflächen oszillierend gut wirkt. Weiterhin sollte dem Anwender eine Änderung des Winkels der Reinigungsbewegung ermöglichen, mit den Außenborsten der kreisflächigen Anordnung besser in die Zahnzwischenräume zu gelangen. Erfindungsgemäß erfolgt die Zahnreinigung, motorisch bewegt, mit den Prozessen "Topfbürste" und "Walzenbürste" separat. Dies hat den großen Vorteil, dass die "großen Zahnoberflächen" und "Zahnzwischenräume" unabhängig voneinander reinigungsoptimierbar sind. Das Entfallen von benutzerabhängigen Einsatzwinkeln erhöht dabei zusätzlich die Prozesssicherheit bei gleichzeitiger Verbesserung der Reinigungsqualität.

Die Erfindung erlaubt durch ihrer Modularität einfachere und wirtschaftlichere Weiterentwicklungen.

Verbesserte Bürstendesigns oder universellere Reinigungsbewegungen sind an dieser Stelle beispielhaft zu nennen. Dabei muss bei der Konzeption mechanischer Schnittstellen zum Beispiel darauf geachtet werden, dass in einer modular nutzbaren Konzeption zu erwartende Schnittstellenkräfte auch universell aufgenommen werden können. Ähnliches gilt für die Reinigungsbewegung, die mit geeignetem Antrieb und zugehöriger Steuerung kontinuierlich drehend, drehrichtungsändernd beide Drehrichtungen nutzend und oszillierend realisierbar ist.

### Interdental - Bürstenkopf für elektrische Zahnbürsten

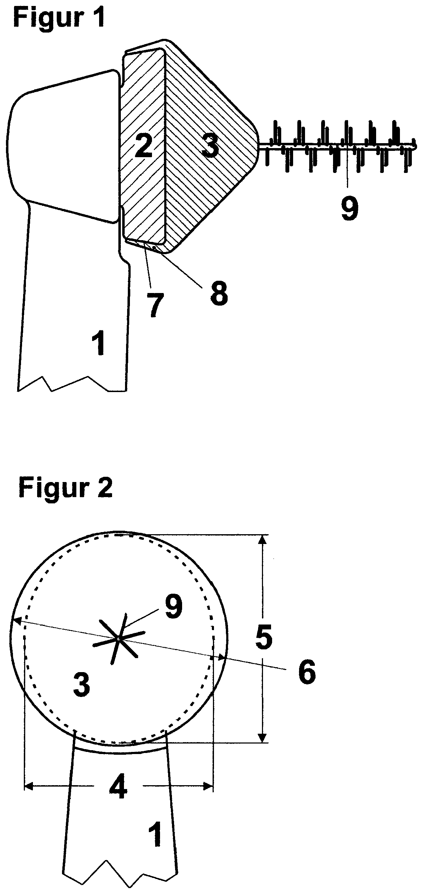

Die Figuren 1 & 2 zeigen die Interdentalbürste (9) in einer Ansicht von vorne (Figur 2) und einem Schnittbild (Figur 1) von der Seite. Sie ist, als Drahtbürste oder komplett aus Kunststoff gefertigt, in verschiedenen Varianten von Kern-, Außendurchmessern, Längen und Borstenarten verwendbar.

Erfindungsgemäß wird sie nicht, wie bisher bei elektrischen Zahnbürsten üblich, als kompletter Bürstenkopf am Antriebsteil aufgesteckt, sondern dockt am Teller (2) mit einer neu konzipierten, zweiten Schnittstelle des Adapters (1) an. Die Lösung ähnelt dem Bürstenkopf mit "Topfbürste", dessen Borstenbüschel normalerweise fest in den Teller (2) eingebunden sind. An Stelle der Borstenbündel werden die verschiedenen Varianten von Interdentalbürsten (9) gegen Verdrehung und Verschiebung im Zentrum des separaten Bürstenkörpers (3) befestigt und mittels der dehnbaren Lippe (8) als getrenntes Teil auf den Teller (2) des Adapters (1) aufgesteckt. Die kegelförmig ausgebildeten Mantelflächen (7) von Bürstenkörper (3) und Teller (2) fixieren die Steckverbindung axial. Gleichzeitig wirkt der kegelförmige Übergang von Teller (2), der an der oberen Aufsteckstelle kreisförmig (6) beginnt und gegenüberliegend oval endet, mit den Hauptachsen (4) und (5) als Verdrehsicherung. Dazu wird der Umfang der kreisförmig und kegelig hergestellten dehnbaren Lippe (8) von Körper (3), kleiner als die elliptisch endende Mantelabwicklung des Tellers (2), an der Aufsteckstelle ausgebildet. Aufgesteckt schließt die Lippe (8) den Tellermantel (2) hygienisch ab.

Der Adapter (1) mit dem um circa ± 30° beweglichen, an Stelle der Topfbürste ebenen Teller (2) ist wie bisher üblich herstellbar, separat vermarktungsfähig und langlebig nutzbar.

Der Interdental - Bürstenkopf kann, wie beschrieben, mit entsprechend ausgebildeter Antriebs Schnittstelle wie ein Ersatzbürstenkopf an die bereits am Markt befindlichen Handhabungsmodule elektrischer Zahnbürsten aufgesteckt und genutzt werden.

Für Handhabungsmodule, die eine gleichzeitige Nutzung kontinuierlicher und in beiden Drehrichtungen verwendeter und oszillierender Reinigungsbewegungen erlauben, kann der Adapter (1) auch als Winkeltrieb, zum Beispiel mit winkeldefinierenden Kegelrädern, realisiert werden.

Funktionserweiternd ist der Adapter (1) für elektrische Anwendungen oder zur Durchleitung von Energie- und Steuersignalen an der An- und Abtriebs Seite mit elektrischen Schnittstellen ausrüstbar. Flüssigkeitsdicht ausgeführt erlauben sie, als mechanische Steckverbindung oder für induktive Übertragung geeignet, eine Integration von zusätzlichen Funktionalitäten am Adapter oder an der Abtriebs Schnittstelle.

## Patentansprüche

1. Interdentalbürsten als walzenförmige Drahtbürsten in verschiedenen Varianten von Kern-, Außendurchmessern, Längen und Borstenarten oder Borsten und Bürstenkern komplett aus Kunststoff gefertigt, die als eigenständiges Teil von einem Bürstenadapter angetrieben um ihre Bürstenachse rotieren, rechts und links drehend einsetzbar sind und oszillierende sowie zyklische Bewegungen ausführen können.

2. Interdentalbürsten nach Anspruch 1, die an Stelle der "Topfbürsten" im Bürstenkopf verwendbar sind oder als separate Einzelteile mit mechanischer Schnittstelle auf einen ebenfalls eigenständig ausgebildeten Adapter aufgesteckt werden können.

3. Adapter nach Anspruch 1 und 2 mit einer hygienisch gestalteten, vielseitig nutzbaren Schnittstelle für ein Zahnreinigungswerkzeug, der mit einer weiteren universell verwendbaren Schnittstelle auf einen bewegungserzeugenden Antrieb eines Handhabungsmoduls aufgesteckt werden kann.

4. Adapter nach Anspruch 1, 2 und 3, der bei Nutzung universeller Drehbewegungen die Drehachse zwischen An- und Abtriebs Schnittstelle wie ein Winkeltrieb im Bereich von mindestens 45° bis 135° umlenken kann.

5. Adapter nach Anspruch 1, 2, 3 und 4, der an seiner An- und Abtriebs Schnittstelle mit elektrischen Steckverbindungen oder induktiver Kopplung für Energie und Steuersignale flüssigkeitsdicht ausgebildet ist.

6. Handhabungsmodul zur Aufnahme einer kabellosen Energieversorgung, integriertem Motorantrieb mit Steuerungselektronik und deren Bedienelementen, die kontinuierlich rechts / links drehend verschiedene Drehzahlen zulässt, programmgesteuerte Abläufe wie zum Beispiel oszillierende Schwingbewegungen ermöglicht oder die Veränderung aller Drehbewegungsparameter zeit-, sensor- und parametergesteuert ermöglicht. Die optimierte, weiterhin universelle, mechanische Schnittstelle für Reinigungswerkzeuge kann auch elektrische Schnittstellen für Energie und Steuersignale beinhalten. Das geschlossen wasserdichte Gehäuse mit Bedienelementen und die mechanischen / elektrischen Schnittstellen ermöglichen einen vor Flüssigkeiten geschützten Einsatz.

7. Das modulare Gesamtkonzept nach Anspruch 1, 2, 3, 4, 5 und 6 beinhaltet weiterhin die Verwendung und Ansteuerung von Einzelkomponenten an beliebigen Stellen der Anordnung.
